# EUROPEAN PATENT APPLICATION

(11) **EP 4 813 789 A1**
(43) Date of publication of application: **30.09.2026**
(21) Application number: 24893015.8
(22) Date of filing: 18.09.2024
(51) Int. Cl.: B60W 60/00, B60W 30/18

(54) **VEHICLE AND CONTROL METHOD THEREFOR**

(30) Priority: 21.11.2023 CN 202311563443
(71) Applicant: BYD Company Limited, Shenzhen, Guangdong 518118 (CN)
(72) Inventor: WANG, Weisong, Shenzhen, Guangdong 518118 (CN); TANG, Minxin, Shenzhen, Guangdong 518118 (CN); TANG, Xin, Shenzhen, Guangdong 518118 (CN); HE, Dan, Shenzhen, Guangdong 518118 (CN); HUANG, Qiang, Shenzhen, Guangdong 518118 (CN)
(74) Representative: Mathys & Squire
(86) International application number: PCT/CN2024/119452
(87) International publication number: WO 2025/107856

(57) **Abstract**

This application discloses a vehicle and a control method therefor, and relates to the field of advanced driving technologies. Before entering a tunnel, the vehicle can perform a lane change operation according to an entry demand for a target road section. The target road section includes a branch road in the tunnel, and/or a ramp at an exit of the tunnel. After entering the tunnel, the vehicle is controlled to travel automatically to enter the target road section or avoid the target road section automatically.

## Description

### CROSS-REFERENCE TO RELATED APPLICATION

This application is based on and claims priority to Chinese Patent Application No. 202311563443.7 filed with the China National Intellectual Property Administration on November 21, 2023, which is incorporated herein by reference in its entirety.

### TECHNICAL FIELD

This application relates to the field of advanced driving technologies, and in particular, to a vehicle and a control method therefor.

### BACKGROUND

In the field of advanced driving, a vehicle may perform assisted driving according to a satellite positioning location. However, after entering a tunnel, the vehicle has difficulty in obtaining an accurate satellite positioning signal. As a result, it is difficult for the vehicle to obtain accurate satellite positioning location.

Therefore, to enable the vehicle to pass through the tunnel safely, before entering the tunnel, the vehicle may prompt a driver to take over control of the vehicle, so that the vehicle can pass through the tunnel safely. It will be understood that the intelligence level of the vehicle is low.

### SUMMARY

This application provides a vehicle and a control method therefor, which can solve a problem of a low intelligence level in a current vehicle. Technical solutions are as follows.

According to one aspect, a control method for a vehicle is provided, including:
before the vehicle enters a tunnel, controlling the vehicle to perform a lane change operation based on an entry demand of the vehicle for a target road section, wherein the target road section includes: a branch road in the tunnel, and/or a ramp at an exit of the tunnel; and
after the vehicle enters the tunnel, controlling the vehicle to travel automatically to enter the target road section or avoid the target road section.

According to another aspect, a controller is provided, wherein the controller includes: a memory, a processor, and a computer program stored in the memory that can be run on the processor, and when the processor executes the computer program, the control method for a vehicle described in the foregoing aspect is implemented.

According to still another aspect, a vehicle is provided, wherein the vehicle includes: a memory, a processor, and a computer program stored in the memory that can be run on the processor, and when the processor executes the computer program, the control method for a vehicle described in the foregoing aspect is implemented.

According to yet another aspect, a computer-readable storage medium is provided, wherein a computer program is stored on the computer-readable storage medium, and the computer program, when executed by a controller, is configured to implement the control method for the vehicle described in the foregoing aspect.

Beneficial effects achieved by the technical solutions provided by this application at least include the following.

This application provides a vehicle and a control method therefor. Before entering a tunnel, the vehicle can perform a lane change operation according to an entry demand for a target road section. The target road section includes the branch road in the tunnel, and/or the ramp at the exit of the tunnel. As the vehicle has performed the lane change operation before entering the tunnel, after entering the tunnel, the vehicle can automatically enter the target road section or avoid the target road section in a case of autonomous driving, without requiring a driver to take over control of the vehicle. It will be understood that the vehicle provided by this application has a high intelligence level, thereby simplifying the operation of the driver, and effectively improving driving experience of the driver.

Additional aspects and advantages of this application are set forth in part in the following description, and part of which becomes apparent from the following description or from the practice of this application.

### BRIEF DESCRIPTION OF DRAWINGS

FIG. 1 is a flowchart of a control method for a vehicle according to an embodiment of this application;
FIG. 2 is a flowchart of another control method for a vehicle according to an embodiment of this application;
FIG. 3 is an example diagram of a road according to an embodiment of this application;
FIG. 4 is a diagram of another road according to an embodiment of this application; and
FIG. 5 is a diagram of a structure of a vehicle according to an embodiment of this application.

### DESCRIPTION OF EMBODIMENTS

Embodiments of this application are described in detail below, examples of which are illustrated in accompanying drawings, where same or similar reference numerals denote the same or similar elements or elements having the same or similar functions throughout. The embodiments described with reference to the accompanying drawings below are examples and intended to explain this application, and shall not be construed as limitations on this application.

An embodiment of this application provides a vehicle, and the vehicle is configured with an advanced driving system (ADS). Correspondingly, the vehicle has an advanced driving function. The advanced driving system may include at least one of the following systems: an integrated adaptive cruise control (ICC) system and an adaptive cruise control system. For example, the advanced driving system includes: the ICC system and the adaptive cruise control system. Correspondingly, the advanced driving function may include one of the following functions: an ICC function and an adaptive cruise control function.

The ICC system is an integrated system of an adaptive cruise control (ACC) system and a lane keeping system (LKS). The ICC system can perform cruise control and lane centering control on the vehicle. That is, a vehicle speed can be controlled according to a specified vehicle speed and a vehicle following distance, and the vehicle is controlled to travel in the middle of a lane according to lane lines on left and right sides. On the basis of the ACC function, the adaptive cruise control system may control the vehicle to change lanes automatically based on navigation information and real-time environmental information.

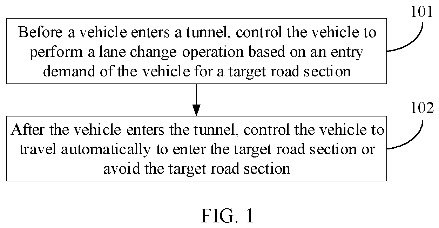

An embodiment of this application provides a control method for a vehicle, wherein the method is applied to a controller of the vehicle. For example, a controller of a vehicle configured with an ADS may be an advanced driving domain controller. With reference to FIG. 1, the method includes the following steps.

Step 101: before the vehicle enters a tunnel, control the vehicle to perform a lane change operation based on an entry demand of the vehicle for a target road section.

In this embodiment of this application, if the controller of the vehicle determines that the vehicle is about to enter the tunnel, and an area in which the tunnel is located has the target road section, the vehicle may be controlled to perform the lane change operation according to the entry demand of the vehicle for the target road section. The target road section includes: a branch road in the tunnel, and/or a ramp at an exit of the tunnel.

For example, if the controller determines that the vehicle is required to enter the target road section, the controller may control the vehicle to change to a lane close to the target road section. If the controller determines that the vehicle is not required to enter the target road section, the controller may control the vehicle to change to a lane away from the target road section. The lane close to (or away from) the target road section refers to a lane close to (or away from) the target road section in a traveling direction of the vehicle.

In this way, after entering the tunnel, the vehicle can automatically enter or avoid the target road section without manual takeover of the control of the vehicle.

Step 102: after the vehicle enters the tunnel, control the vehicle to travel automatically to enter the target road section or avoid the target road section.

After the vehicle enters the tunnel, the controller may control the vehicle to travel automatically according to a control policy to enter or avoid the target road section.

In conclusion, this embodiment of this application provides a control method for a vehicle. Before entering a tunnel, the vehicle can perform a lane change operation according to an entry demand for a target road section. The target road section includes the branch road in the tunnel, and/or the ramp at the exit of the tunnel. As the vehicle has performed the lane change operation before entering the tunnel, after entering the tunnel, the vehicle can automatically enter the target road section or avoid the target road section in a case of autonomous driving, without requiring a driver to take over control of the vehicle. It will be understood that the vehicle provided in this embodiment of this application has a high intelligence level, thereby simplifying an operation of the driver, and effectively improving driving experience of the driver.

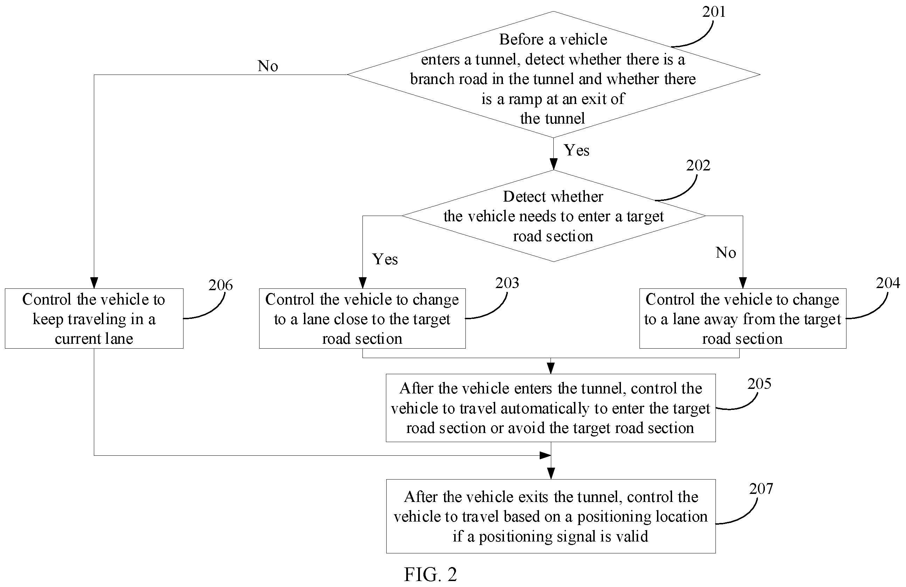

FIG. 2 is a flowchart of another control method for a vehicle according to an embodiment of this application. The method may be applied to a controller of the vehicle, for example, a controller of a vehicle configured with an ADS. With reference to FIG. 2, the method may include the following steps.

Step 201: before the vehicle enters a tunnel, detect whether there is a branch road in the tunnel and whether there is a ramp at an exit of the tunnel.

After determining that the vehicle is about to enter the tunnel, before the vehicle enters the tunnel, the controller of the vehicle may detect whether there is a branch road in the tunnel and whether there is a ramp at the exit of the tunnel. If the controller determines that there is a branch road in the tunnel, and/or that there is a ramp at the exit of the tunnel, step 202 may be performed. If the controller determines that there is no branch road in the tunnel, and there is no ramp at the exit of the tunnel, step 206 may be performed.

The distance between the ramp at the exit of the tunnel and the exit of the tunnel is less than a distance threshold. The vehicle may include a positioning sensor. The distance threshold may be obtained through calculation based on a maximum speed limit of a road on which the vehicle travels and duration required for a satellite positioning signal (referred to as a positioning signal for short) of the positioning sensor to take effect after the vehicle exits the tunnel. For example, the distance threshold may be a product of the speed limit and the duration. It will be understood that the ramp at the exit of the tunnel refers to a ramp that the vehicle may be required to enter before the positioning signal of the vehicle is restored.

Optionally, the road on which the vehicle travels may be a highway. The positioning signal may be a global navigation satellite system (GNSS) signal. Before the vehicle enters the tunnel, an ADS function of the vehicle may be enabled, and correspondingly, the vehicle may implement assisted driving under the control of the ADS.

In this embodiment of the application, before the vehicle enters the tunnel, the controller of the vehicle may obtain road distribution information in the tunnel that the vehicle is about to enter, as well as road distribution information at the exit of the tunnel. Then, the controller may determine whether there is a branch road in the tunnel along a traveling direction of the vehicle based on the road distribution information in the tunnel. In addition, the controller may further determine whether there is a ramp at the exit of the tunnel based on the road distribution information at the exit of the tunnel.

The road distribution information in the tunnel can reflect road distribution in the tunnel. The road distribution information at the exit of the tunnel can reflect road distribution at the exit.

In this embodiment of this application, a navigation application is installed in the vehicle, which may provide a common navigation map for the controller of the vehicle. Before the vehicle enters the tunnel, the controller may obtain the road distribution information in the tunnel and the road distribution information at the exit of the tunnel based on the common navigation map.

Optionally, in a traveling process of the vehicle, if the controller of the vehicle determines that the vehicle is about to enter the tunnel and a distance between the vehicle and an entrance of the tunnel is within a distance range, the controller of the vehicle may obtain the road distribution information in the tunnel that the vehicle is about to enter, as well as the road distribution information at the exit of the tunnel. The distance range may be prestored by the vehicle. For example, the distance may range from 2 km (km) to 5 km.

Step 202: detect whether the vehicle is required to enter a target road section.

If the controller determines that there is a branch road in the tunnel, and/or that there is a ramp at the exit of the tunnel, the controller may detect whether the vehicle is required to enter the target road section, that is, may determine an entry demand of the vehicle for the target road section. If the controller determines that the vehicle is required to enter the target road section, step 203 may be performed. If the controller determines that the vehicle is not required to enter the target road section, step 204 may be performed. The target road section includes: the branch road in the tunnel, and/or the ramp at the exit of the tunnel.

In this embodiment of this application, after determining that there is a branch road in the tunnel and/or that there is a ramp at the exit of the tunnel, the controller may obtain a navigation path of the vehicle, and determine whether the vehicle is required to enter the target road section based on the navigation path. For example, if the controller determines that the navigation path passes through the target road section, the controller may determine that the vehicle is required to enter the target road section. If the controller determines that the navigation path does not pass through the target road section, the controller may determine that the vehicle is not required to enter the target road section.

It will be understood that the navigation path may be generated based on the common navigation map, and can be used to indicate an area that the vehicle is required to pass through from a navigation start point to a navigation destination.

Step 203: control the vehicle to change to a lane close to the target road section.

If the controller determines that the vehicle is required to enter the target road section, the controller may control the vehicle to change to a lane close to the target road section. In this way, it can be convenient for the vehicle to enter the target road section smoothly.

In this embodiment of this application, before the vehicle enters the tunnel, the controller may control the vehicle to perform a lane change operation to change to a lane close to the target road section based on a positioning location determined from sensor data of the vehicle. The sensor data includes at least: positioning data of the positioning sensor. The positioning data may include: a satellite positioning location of the vehicle, wherein the satellite positioning location is obtained based on a positioning signal.

As the positioning data of the vehicle is usually valid before the vehicle enters the tunnel, the vehicle is controlled to perform lane change based on the positioning location before entering the tunnel, so that relatively high traveling safety of the vehicle can be ensured.

Optionally, the positioning location may be determined according to the sensor data of the vehicle and a vehicle body signal. The vehicle may include: a vision sensor, an inertial measurement unit (IMU), and a radar. Correspondingly, the sensor data may further include: visual data of the vision sensor, inertial data of the IMU, and radar data of the radar. In this way, it can be ensured that accuracy of the determined positioning location is relatively high, and accurate and safe lane change of the vehicle can be ensured.

The visual data and the radar data are both used to reflect a distance between the vehicle and lane lines of a current lane. The inertial data may include: acceleration and angular velocity of the vehicle. The vehicle body signal may include: a vehicle speed, a lateral acceleration, a longitudinal acceleration, a steering wheel angle, and a gear position.

In this embodiment of this application, the vehicle may further include a fused positioning component. The fused positioning component may be connected to the controller, the vision sensor, the IMU, the radar, and the positioning sensor. In addition, the fused positioning component may further obtain a vehicle body signal of the vehicle via a bus of the vehicle.

The fused positioning component may provide a positioning location with relatively high precision (which may also be referred to as a fused positioning location) for the controller based on positioning data of the positioning sensor, the visual data of the vision sensor, the inertial data of the IMU, and the vehicle body signal. The positioning location may be a lane-level positioning location.

The controller may then control the vehicle to change to a lane close to the target road section according to the positioning location and a high-precision navigation map provided by the navigation application. Compared with the common navigation map, the high-precision navigation map is an electronic map with higher precision and more data dimensions. For example, the high-precision navigation map may be accurate to a centimeter level, and in addition to road information, the high-precision navigation map further includes traffic-related surrounding static information (a traffic sign, traffic lights, and the like).

It will be understood that the vision sensor may include: a camera. The radar may be a lidar.

Optionally, if the controller determines that the lane in which the vehicle is currently located is not close to the target road section, the controller may control the vehicle to change to a lane close to the target road section. If the controller determines that the lane in which the vehicle is currently located is the lane close to the target road section, the controller may determine not to control the vehicle to perform the lane change operation, and control the vehicle to keep traveling in this lane.

It will be understood that, when the target road section includes the branch road in the tunnel and the ramp at the exit of the tunnel, as both the branch road and the ramp are generally located on a right side of the traveling direction of the vehicle, before entering the tunnel, the vehicle is controlled to change to the lane close to the target road section to ensure that the vehicle can enter the branch road and the ramp in sequence.

Step 204: control the vehicle to change to a lane away from the target road section.

If the controller determines that the vehicle is not required to enter the target road section, the controller may control the vehicle to change to a lane away from the target road section. In this way, the vehicle can be prevented from entering the target road section after entering the tunnel.

For example, the controller may control the vehicle to perform the lane change operation to change to the lane away from the target road section based on the positioning location determined from the sensor data of the vehicle.

It will be understood that an implementation process in which the controller controls the vehicle to change to the lane away from the target road section based on the positioning location may refer to a related implementation process in step 203. Details are not described herein again in this embodiment of this application.

Optionally, if the controller determines that the lane in which the vehicle is currently located is close to the target road section, the controller may control the vehicle to change to a lane away from the target road section. If the controller determines that the lane in which the vehicle is currently located is the lane away from the target road section, the controller may determine not to control the vehicle to perform the lane change operation, and control the vehicle to keep traveling in this lane.

Step 205: after the vehicle enters the tunnel, control the vehicle to travel automatically to enter the target road section or avoid the target road section.

After the vehicle enters the tunnel, the controller may control the vehicle to travel according to a target control policy to enter the target road section or avoid the target road section. The target control policy may include: performing lateral control on the vehicle based on the visual data of the vision sensor of the vehicle.

The target control policy may further include: performing longitudinal control on the vehicle based on the inertial data of the IMU of the vehicle. Through the lateral control and longitudinal control on the vehicle, the controller may control the vehicle to travel forward automatically in the middle of the lane without the need for the driver to take over. During this process, the vehicle strictly performs a single-lane cruising operation.

The process of performing longitudinal control on the vehicle based on the inertial data of the IMU of the vehicle may include: controlling, by the controller, the vehicle to move forward based on a longitudinal moving distance of the vehicle, making the moving distance of the vehicle be the longitudinal moving distance.

In this embodiment of this application, when the vehicle is not required to enter the target road section, the visual data of the vision sensor may include: a distance between the vehicle and lane lines of the current lane. In this case, a process in which the controller performs lateral control on the vehicle may include: if the controller determines that a difference between a first distance and a second distance is greater than a difference threshold, adjusting a location of the vehicle to make the vehicle located in the middle of the current lane to automatically avoid the target road section. The first distance may be a lateral distance between the vehicle and a left lane line of the current lane, and the second distance may be a lateral distance between the vehicle and a right lane line of the current lane. The difference threshold may be prestored by the controller.

When the vehicle is required to enter the target road section, if the controller has not identified the target road section by the vision sensor, the controller may perform lateral control on the vehicle in a method of lateral vehicle control when the vehicle is not required to enter the target road section.

If the controller identifies the target road section by the vision sensor, the visual data of the vision sensor may include at least: a distance between the vehicle and a right edge line of the target road section. The right edge line is an edge line on a right side of the target road section along the traveling direction of the vehicle. The edge line may be a lane line or a curb of the target road section. For example, the visual data may include: a distance between the vehicle and a left edge line of the target road section, and the distance between the vehicle and the right edge line of the target road section.

In this case, the controller may perform lateral control on the vehicle based on at least one of the distance between the vehicle and the left edge line of the target road section and the distance between the vehicle and the right edge line of the target road section. For example, the controller may perform lateral control on the vehicle based on the distance between the vehicle and the right edge line of the target road section. In this way, the vehicle can be ensured to enter the target road section smoothly.

A process of performing lateral control on the vehicle based on the distance between the vehicle and the right edge line of the target road section may include: detecting whether the distance is a preset distance, and if it is determined that the distance is not the preset distance, adjusting a location of the vehicle to control the distance between the vehicle and the right edge line to be the preset distance, thereby enabling the vehicle to automatically enter the target road section. The preset distance may be prestored by the controller.

In this embodiment of this application, after the vehicle enters the tunnel, the fused positioning component may dynamically output a distance between the vehicle and the lane line of the current lane (or the distance between the vehicle and the right edge line of the target road section) to the controller according to the visual data of the vision sensor and the radar data of the radar, predict a longitudinal moving distance of the vehicle according to the inertia data of the IMU and the vehicle body signal, and dynamically output the longitudinal moving distance to the controller.

In addition to the distance between the vehicle and the lane line, the visual data of the vision sensor may further include: a steering arrow, a diversion area, text, a ground speed limit, a deceleration sign, a stop line, zebra crossing, a road boundary, a static obstacle, a lamppost, a traffic sign, and traffic lights.

Optionally, after the vehicle enters the tunnel, if the controller determines that the positioning signal fails, the controller may control the vehicle to travel according to the target control policy.

Step 206: control the vehicle to keep traveling in the current lane.

If the controller determines that there is no branch road in the tunnel and there is no ramp at the exit of the tunnel, the controller may determine that the vehicle is not required to perform the lane change operation, and then may control the vehicle to keep traveling in the current lane.

In this embodiment of this application, when there is no branch road in the tunnel and there is no ramp at the exit of the tunnel, after the vehicle enters the tunnel, the controller may control the vehicle to travel automatically according to the target control policy.

Step 207: after the vehicle exits the tunnel, if the positioning signal is valid, control the vehicle to travel based on the positioning location.

After the vehicle exits the tunnel, the positioning signal may be gradually restored. After the positioning signal is restored, the vehicle may control the vehicle to travel based on the positioning location determined from the sensor data of the vehicle and the high-precision navigation map.

It will be understood that when the positioning signal is not restored, the controller may control the vehicle to travel according to the target control policy.

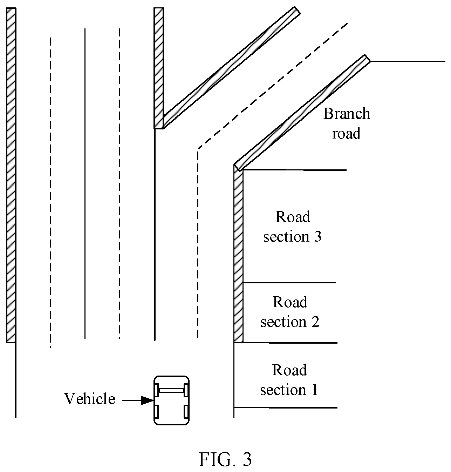

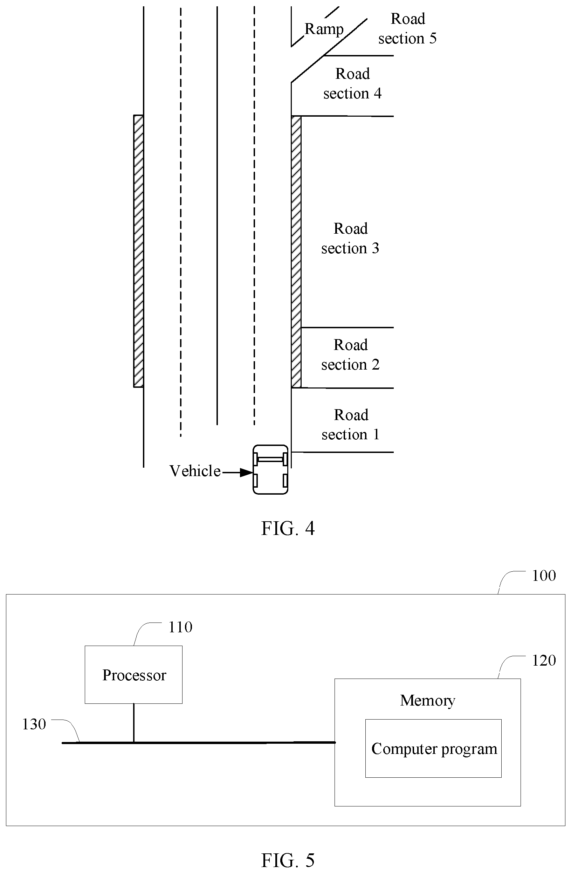

In the following, the positioning signal being a GNSS signal is taken as an example, and the method provided by an embodiment of this application is described with reference to FIG. 3 and FIG. 4.

FIG. 3 is a diagram of a road according to an embodiment of this application. As shown in FIG. 3, there is a branch road in the tunnel. FIG. 4 is a diagram of another road according to an embodiment of this application. As shown in FIG. 4, there is a ramp at the exit of the tunnel. It will be understood from FIG. 3 and FIG. 4 that, along a traffic direction of a road, the road may include: a road section 1, a road section 2, a road section 3, a road section 4, and a road section 5 (the road section 4 and the road section 5 are not shown in FIG. 3).

The road section 1 is a road section before the vehicle enters the tunnel. A length of the road section may fall within the distance range described above, that is, the length of the road section may be greater than or equal to 2 km, and less than or equal to 5 km. The road section 2 is a first transition road section after the vehicle enters the tunnel. In the first transition road section, the GNSS signal of the vehicle gradually fails, and the vehicle is required to be controlled to travel according to the target control policy after the GNSS signal fails. It will be understood that, in the road section 2, a method of controlling the vehicle by the controller transitions from control based on a positioning location at least determined from the positioning data to control based on the visual data and the inertial data (that is, the control based on the target control policy).

The road section 3 is a stable cruising road section in the tunnel, and the vehicle in the road section 3 may be controlled to travel smoothly according to the target control policy. The road section 4 is a second transition road section after the vehicle exits the tunnel. The GNSS signal of the vehicle is gradually restored in the road section 4, and after the GNSS signal is restored, the controller may control the vehicle to travel based on the positioning location. The road section 4 may include a ramp. For example, the road section 4 shown in FIG. 4 includes the ramp. The road section 5 is a stable cruising road section outside the tunnel. In the road section 5, the controller may control the vehicle to travel smoothly based on the GNSS signal.

After an ADS function of the vehicle is enabled and the vehicle enters the road section 1, the controller may determine whether there is a branch road in the tunnel that the vehicle is about to enter and whether there is a ramp at an exit of the tunnel based on prior information provided by the common navigation map (that is, road distribution information in the tunnel and road distribution information at the exit of the tunnel described above). If the controller determines that there is a branch road in the tunnel and that there is no ramp at the exit of the tunnel, the controller may continue to control the vehicle to move forward in the current lane according to a fused positioning location. If the controller determines that there is a branch road in the tunnel and/or there is a ramp at the exit of the tunnel, the controller determines whether the vehicle is required to enter the target road section based on a navigation path.

If the controller determines that the vehicle is required to enter the target road section, in the road section 1 shown in FIG. 3 and FIG. 4, the controller may control the vehicle to change from the current lane to a lane close to the target road section. For example, the controller may control the vehicle to change to the rightmost lane in the traveling direction of the vehicle. If the controller determines that the vehicle is not required to enter the target road section, in the road section 1, the controller may control the vehicle to change from the current lane to a lane away from the target road section to travel. For example, the controller may control the vehicle to change to a leftmost lane in the traveling direction of the vehicle.

After the vehicle enters the road section 2 shown in FIG. 3 and FIG. 4, the GNSS signal gradually fails, causing the positioning data of the positioning sensor to gradually fail. After the GNSS signal fails, the ADS function is not degraded. In this case, the controller may implement lateral control on the vehicle according to the visual data of the vision sensor, that is, based on a distance (that is, a lateral distance) between the vehicle and left and right lane lines of the lane in which the vehicle is located, that is, lateral control of the vehicle. In addition, the controller may perform longitudinal control on the vehicle according to the inertia data of the IMU, that is, longitudinal control of the vehicle. That is, the controller may control the vehicle to travel according to the target control policy. It will be understood that, when traveling in the tunnel, the vehicle strictly performs a single-lane cruising operation and does not perform the lane change operation.

In the road section 3 (that is, a stable cruising stage in the tunnel), the controller continues to control the vehicle to travel according to the target control policy. Thereafter, when there is a branch road in the tunnel and the vehicle is required to enter the branch road, if the controller identifies the branch road through the vision sensor, at a stage of transitioning from the road section 3 to the branch road, the controller may perform lateral control on the vehicle based on a distance between the vehicle and a right edge line (that is, a right lane line or a right curb) of the branch road, and may control the vehicle to decelerate to maintain a reasonable cruising speed, thereby controlling the vehicle to enter the branch road smoothly. After the vehicle enters the branch road, the controller may control the vehicle to travel according to the target control policy. It will be understood that the controller may perform lateral control on the vehicle based on a single edge line, so that the vehicle can enter the branch road. During lateral control of the vehicle, the controller may determine whether a lane deviation occurs in the vehicle according to the distance between the vehicle and the right edge line and a change in the distance. This distance is calculated based on a vehicle body width and a lateral remaining width. The lateral remaining width refers to a distance between the vehicle body and the lane line.

After the vehicle enters the road section 4, when the controller determines that there is no ramp at the exit of the tunnel, or the vehicle is not required to enter the ramp, the controller may control the vehicle to continue to perform a single-lane cruising operation, and wait for the GNSS signal to restore. When the controller determines that the vehicle is required to enter the ramp, after identifying the ramp by the vision sensor, the controller may perform lateral control on the vehicle based on the distance between the vehicle and the right edge line of the ramp, and control the vehicle to decelerate to maintain a reasonable cruising speed, thereby controlling the vehicle to enter the ramp smoothly.

In the road section 4, if the GNSS signal is restored, the fused positioning component may provide a lane-level positioning location (that is, the positioning location) to the controller. Correspondingly, the controller may control the vehicle to travel based on the lane-level positioning location. It will be understood that, in the road section 4, a method of controlling the vehicle by the controller is switched from control based on the target control policy to control based on the positioning location.

In the road section 5, the controller smoothly controls the vehicle to travel based on the lane-level positioning location to continue assisted driving.

It will be understood from the foregoing description that, in the method provided in this embodiment of this application, before the vehicle enters the tunnel, the driver is not required to take over control of the vehicle. After the vehicle enters the tunnel, the ADS of the vehicle can still control the vehicle to pass through the tunnel and enter the target road section without stopping work due to the takeover of the driver. That is, the vehicle provided in this embodiment of this application may still maintain an advanced driving function to continue traveling after entering the tunnel and pass through the tunnel smoothly. Therefore, a frequency of taking over the vehicle by the driver is reduced, and user experience of the driver is effectively improved.

It will be understood that a sequence of steps in the control method for the vehicle provided in this embodiment of this application may be properly adjusted, and the steps may also be correspondingly increased or decreased according to a situation. For example, step 201 and step 206 may be deleted as appropriate. Alternatively, step 207 may be deleted as appropriate. Any method that can be easily thought by a person skilled in the art within the technical scope disclosed in this application shall fall within the scope of protection of this application, and therefore details are not described in detail again.

In conclusion, this embodiment of this application provides a control method for a vehicle. Before entering a tunnel, the vehicle can perform a lane change operation according to an entry demand for a target road section. The target road section includes the branch road in the tunnel, and/or the ramp at the exit of the tunnel. As the vehicle has performed the lane change operation before entering the tunnel, after entering the tunnel, the vehicle can automatically enter the target road section in a case of autonomous driving, without requiring a driver to take over control of the vehicle. It will be understood that the vehicle provided in this embodiment of this application has a high degree of intelligence, thereby simplifying an operation of the driver, and effectively improving driving experience of the driver.

An embodiment of this application provides a vehicle, wherein the vehicle is capable of executing the control method for the vehicle provided by the foregoing method embodiments. The vehicle includes a controller. The controller is configured to:
control the vehicle to perform a lane change operation based on an entry demand of the vehicle for a target road section before the vehicle enters the tunnel, wherein the target road section includes: a branch road in the tunnel, and/or a ramp at an exit of the tunnel; and
control the vehicle to travel automatically to enter the target road section or avoid the target road section after the vehicle enters the tunnel.

Optionally, the vehicle includes a vision sensor. The controller may be configured to:
control the vehicle to travel according to a target control policy.

The target control policy may include: performing lateral control on the vehicle based on visual data of the vision sensor.

Optionally, the vehicle is required to enter the target road section. The controller may be configured to:
after the target road section is identified, the visual data includes: a distance between the vehicle and a right edge line of the target road section, wherein the right edge line is an edge line on a right side of the target road section in a traveling direction of the vehicle.

Optionally, the vehicle further includes an inertia measurement unit, and the target control policy further includes: performing a longitudinal control on the vehicle based on inertial data of the inertial measurement unit.

Optionally, the controller may be configured to:
control the vehicle to travel according to the target control policy if a positioning signal fails.

Optionally, the vehicle includes: a positioning sensor. The controller may be configured to:
control the vehicle to perform a lane change operation based on a positioning location determined from sensor data of the vehicle.

The sensor data includes at least: positioning data of the positioning sensor.

Optionally, the controller may be configured to:
control the vehicle to change to a lane close to the target road section when it is determined that the vehicle is required to enter the target road section; or
control the vehicle to change to a lane away from the target road section when it is determined that the vehicle is not required to enter the target road section.

Optionally, the controller may further be configured to:
determine whether the vehicle is required to enter the target road section according to a navigation path of the vehicle.

Optionally, the controller may be configured to:
determine that the vehicle is required to enter the target road section if the navigation path passes through the target road section; or
determine that the vehicle is not required to enter the target road section if the navigation path does not pass through the target road section.

Optionally, the controller may be configured to:
determine whether the vehicle is required to enter the target road section according to a navigation path of the vehicle when there is a branch road in the tunnel and/or there is a ramp at an exit of the tunnel.

In conclusion, this embodiment of this application provides a vehicle. Before entering a tunnel, the vehicle can perform a lane change operation according to an entry demand for a target road section. The target road section includes the branch road in the tunnel, and/or the ramp at the exit of the tunnel. As the vehicle has performed the lane change operation before entering the tunnel, after entering the tunnel, the vehicle can automatically enter the target road section or avoid the target road section in a case of autonomous driving, without requiring a driver to take over control of the vehicle. It will be understood that the vehicle provided in this embodiment of this application has a high degree of intelligence, thereby simplifying the operation of the driver, and effectively improving driving experience of the driver.

With reference to FIG. 5, an embodiment of this embodiment provides a controller 100. The controller 100 may further include: a processor 110 and a memory 120. The processor 110 is connected to the memory 120, for example, via a bus 130.

The processor 110 may be a CPU (Central Processing Unit), a general-purpose processor, a DSP (Digital Signal Processor), an ASIC (Application Specific Integrated Circuit), an FPGA (Field Programmable Gate Array), or other programmable logic devices, a transistor logic device, a hardware device, or any combination thereof. It may implement or execute various exemplary logical blocks, modules, and circuits described in conjunction with the disclosure of this application. The processor 110 may be a combination capable of implementing a computing function, for example, including a combination of one or more microprocessors, or a combination of a DSP and a microprocessor.

The bus 130 may include a channel for communicating information among the foregoing components. The bus 130 may be a PCI (Peripheral Component Interconnect) bus, an EISA (Extended Industry Standard Architecture) bus, or the like. The bus 130 may be classified into an address bus, a data bus, a control bus, and the like. For ease of representation, the bus is represented by merely one thick line in FIG. 5, but this does not mean that there is merely one bus or merely one type of bus.

The memory 120 is configured to store a computer program corresponding to the control method for the vehicle provided in the foregoing embodiment of this application, and the computer program is controlled and executed by the processor 110. The processor 110 is configured to execute the computer program stored in the memory 120 to implement the content shown in the foregoing method embodiments.

An embodiment of this application provides a vehicle, the vehicle includes: a memory, a processor, and a computer program that is stored in the memory and that can be run on the processor. When the processor executes the computer program, the control method for a vehicle provided in the foregoing method embodiments is implemented. For example, the method shown in FIG. 1 or FIG. 2.

An embodiment of this application further provides a computer-readable storage medium, where a computer program is stored on the computer-readable storage medium. When the computer program is executed by a controller, the control method for a vehicle provided in the foregoing method embodiments is implemented. For example, the method shown in FIG. 1 or FIG. 2.

It will be noted that logic and/or steps represented in the flowchart or described in other ways herein, for example, may be considered as a sequenced list of executable instructions for implementing a logical function, and may be specifically implemented in any computer-readable medium to be used by an instruction execution system, an apparatus or a device (such as a computer-based system, a system including a processor, or other systems capable of fetching instructions from the instruction execution system, apparatus or device and execute these instructions), or used in combination with the instruction execution system, apparatuses or device. For this specification, the "computer-readable medium" may be any apparatus that may include, store, communicate, propagate, or transport a program for use by or in connection with an instruction execution system, apparatus, or device. More specific examples (a non-exhaustive list) of the computer-readable medium include the followings: an electrical connection portion having one or more wires (an electronic apparatus), a portable computer cassette (a magnetic apparatus), a random-access memory (RAM), a read-only memory (ROM), an erasable and programmable read-only memory (an EPROM or a flash memory), an optical fiber apparatus, and a portable compact disk read-only memory (CDROM). In addition, the computer-readable medium may even be paper or other suitable media on which the program can be printed, this is because the program may be electronically obtained, for example, by optically scanning the paper or other media and then editing, interpreting, or processing, when necessary, in other suitable ways, and is then stored in a computer memory.

It will be noted that various portions of this application may be implemented by hardware, software, firmware, or their combinations. In the foregoing implementations, various steps or methods may be implemented in software or firmware stored in a memory and executed by a suitable instruction execution system. For example, if the steps or methods are implemented by hardware, as in another implementation, it can be implemented by any one or a combination of the following technologies known in the art: a discrete logic circuit with a logic gate for implementing a logic function on a data signal, an application specific integrated circuit with a suitable combinational logic gate, a programmable gate array (PGA), a field programmable gate array (FPGA), and the like.

In the descriptions of this specification, descriptions referring to the terms "one embodiment", "some embodiments", "examples", "specific example" or "some examples" mean that specific features, structures, materials, or characteristics described in conjunction with this embodiment or example are included in at least one embodiment or example of this application. In this specification, the illustrative expression of the foregoing terms does not necessarily refer to the same embodiment or example. Moreover, the specific features, structures, materials, or characteristics described may be combined in any one or more embodiments or examples in a suitable manner.

In addition, the descriptions of "first" and "second" are merely used for descriptive purposes, and will not be understood as indicating or implying their relative importance or implicitly indicating the number of indicated technical features. Therefore, the features defined as "first" and "second" can explicitly or implicitly include at least one of these features. In the description of this application, unless otherwise specified, "a plurality of" means at least two, such as two, or three.

In the description of this application, unless expressly specified and limited otherwise, the terms "install", "connect", "couple", "fix", and the like will be understood broadly, for example, it may be a fixed connection, a detachable connection, or an integrated connection; it may be a mechanical connection, or an electrical connection; or it may be a direct connection, an indirect connection through an intermediate medium, or an internal communication between the two elements or interactions between the two elements. For those of ordinary skill in the art, the specific meanings of the foregoing terms in this application will be understood on a case-by-case basis.

Although embodiments of this application have already shown and described in the foregoing, it will be understood that the foregoing embodiments are exemplary and will not be construed as a limitation on this application. A person of ordinary skill in the art may make changes, modifications, substitutions, and alternations to the foregoing embodiments within the scope of this application.

## Claims

1. A control method for a vehicle, comprising:
before the vehicle enters a tunnel, controlling the vehicle to perform a lane change operation based on an entry demand of the vehicle for a target road section, wherein the target road section comprises: a branch road in the tunnel, and/or a ramp at an exit of the tunnel; and
after the vehicle enters the tunnel, controlling the vehicle to travel automatically to enter the target road section or avoid the target road section.

2. The method according to claim 1, wherein the vehicle comprises a vision sensor; and controlling the vehicle to travel automatically comprises:
controlling the vehicle to travel according to a target control policy, wherein
the target control policy comprises: performing lateral control on the vehicle based on visual data of the vision sensor.

3. The method according to claim 2, wherein the entry demand of the vehicle for the target road section is that the vehicle is required to enter the target road section; and after the target road section is identified, the visual data comprises: a distance between the vehicle and a right edge line of the target road section, and the right edge line is an edge line on a right side of the target road section along a traveling direction of the vehicle; and
controlling the vehicle to travel according to a target control policy comprises: performing lateral control on the vehicle based on the distance between the vehicle and the right edge line of the target road section.

4. The method according to claim 2, wherein the vehicle further comprises an inertial measurement unit, and the target control policy further comprises: performing longitudinal control on the vehicle based on inertial data of the inertial measurement unit.

5. The method according to claim 2, wherein controlling the vehicle to travel according to a target control policy comprises:
controlling the vehicle to travel according to the target control policy if a positioning signal of the vehicle fails.

6. The method according to claim 1, wherein the vehicle comprises a positioning sensor; and controlling the vehicle to perform a lane change operation comprises:
controlling the vehicle to perform the lane change operation based on a positioning location determined from sensor data of the vehicle, wherein
the sensor data comprises at least positioning data of the positioning sensor.

7. The method according to any one of claims 1 to 6, wherein controlling the vehicle to perform a lane change operation based on an entry demand of the vehicle for a target road section comprises:
controlling the vehicle to move into a lane adjacent to the target road section when the vehicle is determined to be required to enter the target road section; and
controlling the vehicle to move into a lane farther from the target road section when the vehicle is determined to be not required to enter the target road section.

8. The method according to claim 7, further comprising:
determining whether the vehicle is required to enter the target road section according to a navigation path of the vehicle.

9. The method according to claim 8, wherein the determining whether the vehicle is required to enter the target road section according to a navigation path of the vehicle comprises:
the vehicle is determined to be required to enter the target road section if the navigation path passes through the target road section; and
the vehicle is determined to be not required to enter the target road section if the navigation path does not pass through the target road section.

10. A controller, comprising a memory, a processor, and a computer program stored in the memory that is capable of being run on the processor, wherein when the processor executes the computer program, the method according to any one of claims 1 to 9 is implemented.

11. A vehicle, comprising: a memory, a processor, and a computer program stored in the memory that is capable of being run on the processor, wherein when the processor executes the computer program, the method according to any one of claims 1 to 9 is implemented.

12. A computer-readable storage medium, on which a computer program is stored, wherein when the computer program is executed by a processor, the method according to any one of claims 1 to 9 is implemented.
